# EUROPEAN PATENT APPLICATION

(11) **EP 1 258 191 A1**
(43) Date of publication of application: **20.11.2002**
(21) Application number: 02253415.0
(22) Date of filing: 15.05.2002
(51) Int. Cl.: A01N 25/08

(54) **Agricultural composition**

(30) Priority: 15.05.2001 JP 2001144705
(71) Applicant: MITSUI CHEMICALS, INC., Tokyo (JP)
(72) Inventor: Kawahara, Atsuko, Mobara-shi, Chiba (JP); Morinaga, Koichi, Mobara-shi, Chiba (JP); Nakamura, Masahiko, Mobara-shi, Chiba (JP); Shimono, Seiichi, Mobara-shi, Chiba (JP); Fumoto, Yasunori, Mobara-shi, Chiba (JP); Ozawa, Shuji, Mobara-shi, Chiba (JP)
(74) Representative: Stuart, Ian Alexander

(57) **Abstract**

Leaching of a chemical substance as an agriculturally active ingredient can be effectively inhibited by applying the chemical substance together with a tannin.

## Description

### BACKGROUND OF THE INVENTION

### 1. Field of the Invention

This invention relates to an agricultural composition comprising an agriculturally active ingredient and a tannin. In particular, it relates to an agricultural composition which can minimize leaching of the agriculturally active ingredient in the soil.

### 2. Description of the Prior Art

Since emission of chemicals into the environment may cause various problems, regulations on emission of chemicals into the environment have been tightened. Among various environmental problems, a prominent problem is that chemicals infiltrate through the soil into the underground to cause groundwater pollution.

It is well known that groundwater pollution caused by underground infiltration of a chemical substance substantially depends on physical and chemical properties of the soil, aqueous conditions such as the amount of rainfall, and the physiochemical properties of the chemical substance. Among the physiochemical properties of a chemical substance, its water solubility and adsorption degree in the soil are significant factors for leaching of the chemical substance in the soil.

A soil-adsorption equilibrium constant (Koc) is usually used as an index indicating an adsorbability of a chemical substance to the soil. It is generally known that a chemical substance either with a water solubility of 30 ppm or more, or with a soil-adsorption equilibrium constant (Koc) of 500 or less, tends to cause groundwater pollution by its leaching from the soil. It is further known that a soil-adsorption equilibrium constant (Koc) has a close relationship with the water solubility of a chemical substance.

Agricultural agents such as pesticides and fertilizers are typical chemicals, which relatively frequently leach from the soil in the surface area into the underground area. A known method for minimizing leaching of a chemical substance as a pesticide or fertilizer is microencapsulating of the chemical substance or coating it with a resin for its sustained release from the base material and thus prevention of the excessive application of the chemical substance from the soil in the surface area into the underground area.

A composition containing tannic acid and an agriculturally active ingredient is well known (e.g., Brazilian Patent No. 8,603,148 and US Patent No. 4,808,408). In these references, tannic acid is used as a repellent or an agent to solidify the wall of the microcapsule. These references, however, have no descriptions of preventing a chemical substance from its leaching in the soil using tannic acid.

Devitt E. C. et al. have described a method for precipitating and collecting atrazine dissolved in a river using tannic acid and a metal (Water Res., Vol. 32, No. 9, pp.2563-2568 (1998); Environ. Sci. Technol. Vol. 32, No. 2, pp.232-237 (1998)). They have no descriptions concerning chemicals other than atrazine in these references. Furthermore, they have no descriptions concerning the physical properties or the biological activities of the chemical substance to be controlled, and prevention of leaching of chemical substances in the soil.

Recently various pesticides having a nitromethylene or nitroimino group or a cyanoimino group have been developed as a pesticide for insect pest control, including imidacloprid, nitenpyram, thiacloprid, acetamiprid, 3-(2-chlorothiazol-5-ylmethyl)-5-methyl-1,3,5-oxadiazinan-4-ylidene-N-(nitro)amine (common name: thiamethoxam), (E)-1-(2-chloro-1,3-thiazol-5-ylmethyl)-3-methyl-2-nitroguanidine (common name: clothianidin), N-[3-(6-chloropyridin-3-ylmethyl)thiazolidin-2-ylidene]cyanamide (common name: thiacloprid) and (RS)-1-methyl-2-nitro-3-[(3-tetrahydrofuryl)methyl] guanidine (common name: dinotefuran) (EP-192,060, EP-302,389, EP-456,826, EP-580,553, EP-235,725, EP-5,034,404, EP-5,034,404 and EP-649.845). No compositions comprising any of these compounds and tannins have been disclosed. Furthermore, there are no reports indicating that a tannin can prevent these pesticidal component from leaching in the soil.

Thus, an object of this invention is to provide a method of reducing leaching a chemical substance in the soil, which is treated in the agricultural environment, while its original effects can be maintained. In particular, leaching of a chemical substance, which can infiltrate from the soil in the surface area into the underground area, is controlled or reduced.

### SUMMARY OF THE INVENTION

We have selected and investigated agriculturally active components composition including pesticides and fertilizers as a chemical substance, which can infiltrate form the soil in the surface area into the underground area after their application and treatment in an agricultural environment in order to develop a method of reducing their leaching in the soil. As a result, we have found the following matters:
1) When an aqueous solution of a metal salt was added to an aqueous solution of a mixture of an agriculturally active ingredient, such as a pesticide or a fertilizer, and a tannin, coprecipitate containing the ingredient was formed;
2) When the coprecipitate containing the ingredient was applied to stems and leaves of a plant or to the soil where a plant is planted, leaching of the ingredient in the soil could be markedly inhibited;
3) When the coprecipitate containing the ingredient was applied to stems and leaves of a plant or to the soil where a plant was planted, the original effects of the ingredient could be maintained; and
4) When the coprecipitate containing the ingredient was applied to stems and leaves of a plant or to the soil where a plant was planted, leaching of the ingredient could be inhibited by the action of metal ions present in the soil to eliminate the need of adding metal ions to the composition, per se.

The present invention has been achieved based on the new findings including the above matters 1 to 4.

Specifically, this invention provides;
[1] An agricultural composition comprising an agriculturally active ingredient with a water solubility of from 600 ppm to 85 %, both of the lower and upper values are inclusive and are by weight, and/or with a soil-adsorption equilibrium constant (Koc) of from 5 to 200, both of the lower and upper values are inclusive, and a tannin;
[2] An agricultural composition as described in [1], wherein the agriculturally active ingredient is an organo-phosphoric insecticidal agent or an insecticidal agent having a nitromethylene, nitroimino or cyanoimino group;
[3] An agricultural composition as described in [2] wherein the agriculturally active ingredient is at least one selected from the group consisting of nitenpyram, acetamiprid and 3-(2-chlorothiazol-5-ylmethyl)-5-methyl-1,3,5-oxadiazinan-4-ylidene-N-(nitro)amine (common name: thiamethoxam):
[4] An agricultural composition as described in [2] wherein the agriculturally active ingredient is (RS)-1-methyl-2-nitro-3-[(3-tetrahydrofuryl) methyl]guanidine (common name: dinotefuran);
[5] An agricultural composition as described in any of [1] to [4] comprising from 0.5 to 90 parts by weight of the tannin to one part by weight of the agriculturally active ingredient, both of the lower and upper values are inclusive, respectively;
[6] An agricultural composition as described in any of [1] to [5] wherein the tannin is tannic acid;
[7] A method of preventing leaching of an agriculturally active ingredient in the soil wherein a mixture prepared by blending an agriculturally active ingredient with a water solubility of from 600 ppm to 85 %, both of the lower and upper values are inclusive, and/or with a soil-adsorption equilibrium constant (Koc) of from 5 to 200, both of the lower and upper values are inclusive, with a tannin is applied, which allows the tannin in the mixture and metal ions in the soil to prevent the agriculturally active ingredient in the mixture from leaching in the soil;
[8] A method of preventing leaching of a pesticidal ingredient in the soil as described in [7] wherein the agriculturally active ingredient is an organo-phosphoric insecticidal agent or an insecticidal agent having a nitromethylene, nitroimino or cyanoimino group;
[9] An method of preventing leaching of an agriculturally active ingredient in the soil as described in [7] or [8] wherein the agriculturally active ingredient is at least one selected from the group consisting of nitenpyram, acetamiprid and 3-(2-chlorothiazol-5-ylmethyl)-5-methyl-1,3,5-oxadiazinan-4-ylidene-N-(nitro)amine (common name: thiamethoxam);
[10] A method of preventing leaching of an agriculturally active ingredient in the soil as described in [7] or [8] wherein the agriculturally active ingredient is (RS)-1-methyl-2-nitro-3-[(3-tetrahydrofuryl)methyl]guanidine (common name: dinotefuran);
[11] A method of preventing leaching of an agriculturally active ingredient in the soil as described in any of [7] to [10] comprising from 0.5 to 90 parts by weight of the tannin to one part by weight of the agriculturally active ingredient, both of the lower and upper values are inclusive,respectively;
[12] A method of preventing leaching of an agriculturally active ingredient in the soil as described in any of [7] to [11] wherein the tannin is tannic acid; and
[13] A process for controlling a pest comprising the step of applying a pesticidal composition comprising a pesticidal agent with a water solubility of from 600 ppm to 85 %, both of the lower and upper values are inclusive, and/or with a soil-adsorption equilibrium constant (Koc) of from 5 to 200, both of the lower and upper values are inclusive, and having a nitromethylene, nitroimino or cyanoimino group, and a tannin, to stems and leaves of a plant or to the soil around a planting site of a plant.

### DETAILED DESCRIPTION OF PREFERRED EMBODIMENTS

In principle, this invention may be applied to any chemical substance. Nonetheless, this invention may be less effective for a chemical substance with a lower water solubility or a higher soil-adsorption equilibrium constant (Koc), because such a compound may inherently little leach in the soil.

As used herein, the term "a soil-adsorption equilibrium constant (Koc)" is a commonly-used term obtained by converting a soil-adsorption equilibrium constant (Kd) value as a distribution factor of a chemical substance between an aqueous and a soil phases into that per a unit content of organic carbon in the soil.

In the method of this invention, a preferable chemical substance as the agriculturally active ingredient, leaching of which in the soil is to be inhibited is one with a water solubility of from 600 ppm to 85 %, both of the lower and upper values are inclusive, or with a soil-adsorption equilibrium constant (Koc) of from 5 to 200, both of the lower and upper values are inclusive. The chemical substance may have the above two properties in the above ranges, respectively. Such a compound easily leaches in the soil. Furthermore, the method of this invention is preferably applied to an agricultural composition such as a pesticide or fertilizer, in which a chemical substance as its active ingredient tends to leach from the soil in the surface area into the underground area. Examples of such a chemical substance include the followings (hereinafter, a value in parentheses is a water solubility of a chemical substance):
(A) insecticides, miticides and nematicides such as acephate (65 %), dimethoate (25000 ppm), CVP (Chlorfenvin-phos) (1500 ppm), pirimicarb (37 %), methomyl (58 %), oxamyl (28 %), etiofencarb (1800 ppm), cartap (20 %), thiocyclam (about 8 %), nitenpyram (84 %), acetamiprid (4200 ppm), thiamethoxam (4100 ppm) and dinotefuran (54000 ppm);
(B) agents against microorganisms such as bacteriocides and fungicides such as blasticidin (3 %), cymoxanil (1000 ppm), dazomet (3000 ppm), dimethirimol (1200 ppm) and pyroquirone (4000 ppm);
(C) herbicides such as sethoxydim (4700 ppm), asulam (4000 ppm), cinosulfron (3700 ppm), nicosulfron (12200 ppm), molinate (0.1 %), diquat (70 %), chromazone (1100 ppm), dimethachlor (2100 ppm) and promethone (750 ppm);
(D) plant growth regulators such as daminozid (10 %) and dichlorprop (800 ppm); and
(E) fertilizers such as urea.

When being applied as a composition comprising a tannin and one of the above chemical substance, leaching of the chemical substance can be considerably inhibited in the soil. Whether being applied alone or in combination of two or more of the above chemical substances, leaching of the chemical substances can be inhibited in the soil. Furthermore, for application as a mixture with a compound having a lower water solubility, inhibition of leaching of the chemical substance in the soil is not affected.

The Tannins used in the present invention is those derived from plants, which can form a water insoluble salt or a salt having a low water solubility together with a protein(s), an alkaloid(s) or a metal ion(s). The forms of the tannins include composite compounds and mixtures of two or more compounds, which have the above property to form the salts; and which can be suppress, in the soil, leaching of the chemical substance(s) having the above defined water solubility and/or soil-adsorption equilibrium constant (Koc).

Examples of the tannins used in this invention include hydrolyzed tannins such as gallnut, gall, tannic acid, and those from smack, aralia, valonia, chestnut, myrobalan, oak, divi-divi and algarroba; and condensed tannins such as catechin, leucoanthocyanidins, and those from gambir, quebracho, mimosa, mangrove, hemlock, spruce, Burma-cutch, oak bark and persimmon juice. Either type can be used and one or more of the above tannins can be used as long as the desired effects of the present invention can be obtained. Also can be used ground wood containing a plenty of tannins such as tea-leaves and oak barks, or a crude extract obtained by extraction of tannins from a wood. Also can be used commercially available tannins such as gallnut and gall; specifically, "tannic acid" from Junsei-Kagaku Co. Ltd. or from Wako Pure Chemicals, Inc.

Composition of the chemical substance(s) and a tannin(s) for preventing leaching of the chemical substance(s) in the soil is not particularly restrained as long as the tannin(s) is contained at from 0.5 weight parts to one weight part of the chemical substance. It is economically preferable to combine one weight part of the chemical substance with from 5 weight parts to 90 weight parts, both of the lower and upper values are inclusive, more preferably from 0.5 weight parts to 20 weight parts, both of the lower and upper values are inclusive.

The agricultural composition according to the present invention may contain from 1 to 70 weight %, preferably from 2 to 50 weight %, of at least one chemical substance as the agriculturally active ingredient. The agricultural composition according to the present invention may contain from 1 to 70 weight %, preferably from 2 to 50 weight %, of a tannin(s).

When a metal is added to an aqueous solution in which a chemical substance and a tannin are dissolved, coprecipitate containing the chemical substance is fromed. The presence of a tannin can increase the amount of the chemical substance taken in the coprecipitate. This invention utilizes this coprecipitation phenomenon. Examples of metal ions suitable to coprecipitation include ions of metals described in the periodic table such as alkali metals (e.g., potassium and cesium) except sodium and alkaline earth metals (e.g., magnesium, calcium and barium); ions of the elements classified as metals in the periodic table such as titanium, vanadium, chromium, manganese, iron, cobalt, nickel, copper and lead; and ions of the amphoteric metals such as aluminum and zinc.

The coprecipitate thus obtained may be applied to the soil to prevent the chemical substance in the coprecipitate from leaching in the soil without adversely affecting the original effects of the chemical substance. This phenomenon is also applicable to a mixture of a chemical substance, a tannin and a metal salt, which can be also applied to the soil to prevent the chemical substance in the coprecipitate from leaching in the soil.

A large number of elements exist in a variety of forms in the soil. A further feature of this invention is that, while a mixture of a chemical substance, a tannin and a metal salt can be applied to the soil to prevent the chemical substance in the mixture from leaching in the soil, metal ions present in the soil can contribute to prevention of the chemical substance from leaching in the soil, in order to eliminate the need of adding a metal salt. In other words, it has been found that a mixture of a chemical substance and a tannin, which includes no metal salt, may be applied to achieve an effect comparable to that obtained with the mixture further containing a metal salt. Specifically, a mixture of a chemical substance and a tannin can be applied to the soil to prevent leaching of the chemical substance in the soil without adversely affecting the original effects of the chemical substance.

Although a mixture of a chemical substance and a tannin can prevent leaching of the chemical substance in the soil, a metal salt as auxiliary component may be added to the mixture to enhance inhibition of leaching of the chemical substance in the soil. Such metals may be added alone or in combination of two or more, and may be added as a metal salt. Alternatively, metal ions contained in an additives used for its formulation may be used.

Any type of formulation may be used for the agricultural composition as a mixture of a chemical substance and a tannin according to this invention, without limitations. Examples of the formulation to be used include granules, powder, wettable powder or water soluble agent. Alternatively, a solid formulation such as a preparation for seed treatment may be sometimes used. Such a formulation may be prepared, containing solid carriers and/or additives such as surfactants, dispersants, wetting agents, coagulants, antistatic agents, disintegrators, binders, fluidity modifier, stabilizers and desiccants as well as solid carriers.

Examples of a surfactant include nonionic surfactants such as sorbitan fatty acid esters, polyoxyethylenesorbitan fatty acid esters, sucrose fatty acid esters, polyoxyethylene fatty acid esters, polyoxyethylene resin acid esters, polyoxyethylene fatty acid diesters, polyoxyethylene castor oil, polyoxyethylenealkyl ethers, polyoxyethylenealkyl phenyl ethers, polyoxyethylene-dialkyl phenyl ethers, condensation products of a polyoxyethylenealkyl phenyl ether with formaldehyde, polyoxyethylene-polyoxypropylene block polymers, alkylpolyoxyethylene-polyoxypropylene block polymer ethers, alkylphenylpolyoxyethylene-polyoxypropylene block polymer ethers, polyoxyethylenealkylamines, polyoxyethylene fatty acid amides, polyoxyethylene-bisphenyl ethers, polyoxyalkylenebenzyl phenyl ethers, polyoxyalkylene-styryl phenyl ethers, polyoxyalkylene adducts and polyoxyethylene ethers of a higher alcohol, ester types of silicone- and fluorochemical surfactants; anionic surfactants such as alkylsulfates, polyoxyethylenealkyl ether sulfates, polyoxyethylenealkyl phenyl ether sulfates, polyoxyethylenebenzyl phenyl sulfates, polyoxyethylenestyryl phenyl ether sulfates, polyoxyethylene-polyoxypropylene block polymer sulfates, paraffin sulfonate, alkane sulfonates, AOS (α-olefinsulfonic acid sodium salt), dialkyl sulfosuccinates, alkylbenzene sulfonates, naphthalene sulfonates, dialkylnaphthalene sulfonates, condensation products of a naphthalene sulfonate with formaldehyde, alkyldiphenyl ether disulfonates, lignin sulfonates, polyoxyethylenealkyl phenyl ether sulfonates, polyoxyethylenealkyl ether sulfosuccinic acid halfesters, fatty acid salts, N-methyl-fatty acid sarcosinates and resin acid salts , polyoxyethylenealkyl ether phosphates, polyoxyethylenephenyl ether phosphates, polyoxyethylenedialkyl phenyl ether phosphates, polyoxyethylenebenzylated phenyl ether phosphates, polyoxyethylenebenzylated phenyl phenyl ether phosphates, polyoxyethylenestyrylated phenyl ether phosphates, polyoxyethylenestyrylated phenyl phenyl ether phosphates, polyoxyethylene-polyoxypropylene block polymer phosphates, phosphatidylcholine, phosphatidylethanolimine and alkyl phosphates; cationic surfactants such as alkyltrimethylammonium chlorides, methylpolyoxyethylenealkylammonium chlorides, alkyl-N-methylpyridinium bromides, monomethylated ammonium chlorides, dialkylmethylated ammonium chlorides, alkylpentamethylpropyleneamine dichlorides, alkyldimethylbenzalkonium chlorides and benzethonium chloride; and ampholytic surfactants such as dialkyl diaminoethyl betaines and alkyl dimethylbenzyl betaines. These surfactants may be used alone or in combination of two or more, depending on its application. The content of a surfactant used in this invention is generally from 0.1 to 50 weight %, preferably from 0.1 to 10 weight % to the total amount of the agricultural composition, the lower and upper values are inclusive, respectively.

Examples of a solid carrier include clay, calcium carbonate, calcium sulfate, talc, pyrophyllite, bentonite, acid white clay, silica sand, silica rock, zeolite, pearlite, vermiculite, attapulgite, diatomaceous earth, ammonium sulfate, sodium sulfate, crystalline silica, pumice, dextrose, sucrose and lactose, which can be used alone or in combination of two or more. These solid carriers contain trace amounts of metals, which may contribute the effects of this invention, but they are generally not sufficient to the total amount of the chemical substance.

Examples of a dispersant include lignin sulfonates, sodium alkylbenzenesulfonates, dialkylsulfosuccinates, sodium polyacrylates, polycarboxylates, condensation products of a naphthalenesulfonic acid with formaldehyde, alkylarylsulfonates, polyoxyethylene-polyoxypropylene block polymers and polystyrene-polyoxyethylene block polymers, which can be used alone or in combination of two or more.

Examples of a binder include lignin sulfonates (sodium, calcium), polyvinyl alcohol, carboxymethylcellulose, methylcellulose, starch, dextrine, resin emulsions, polyvinyl pyrrolidone and sodium alginate, which can be used alone or in combination of two or more.

Examples of a wetting agent include polyoxyethylenealkyl phenyl ethers, sodium alkylbenzenesulfonates, dioctyl sulfosuccinate, sodium alkylnaphthalenesulfonates, sodium alkylsulfates, sodium alkylsulfosuccinates and polyoxyethylenealkyl aryl ether, which can be used alone or in combination of two or more.

Examples of a fluidity modifier include a mixture of mono- and di-isopropyl phosphates (generally called PAP), higher fatty acids and metal salts of a higher fatty acid, which can be alone or in combination of two or more.

Examples of a stabilizer include antioxidants such as hindered phenol antioxidants, amine antioxidants, phenol antioxidants, sulfur antioxidants and phosphate antioxidants; ultraviolet absorbers such as cerium oxide ultraviolet absorbers, benzotriazole ultraviolet absorbers, benzophenone ultraviolet absorbers and triazine ultraviolet absorbers; and photostabilizers such as benzoate photostabilizers and hindered amine photostabilizers, which can be used alone or in combination of two or more.

Examples of a disintegrant include calcium salt of carboxymethylcellulose, ammonium sulfate, potassium chloride, magnesium chloride, sodium lauryl sulfate, sodium dodecylbenenesulfonate and ammonium polyacrylates.

Examples of a coagulant include liquid paraffin (Driles C), machine oil, ethylene glycol and alkylphosphates (Driles A).

Examples of a antistatic agent include polyoxyethylene laurylamine and polyoxyethylene oleyl ether.

Examples of a desiccant include zeolite, silica gel, calcium oxide and magnesium oxide.

These additives and solid carriers may be used in any combination as long as they do not affect the original functions of the chemical substance or its stability in the formulation.

A mixture of a chemical substance and a tannin thus prepared may be used in a variety of applications. Particularly, when the chemical substance is an agricultural composition including a pesticide or fertilizer, it may be foliar-applied to a plant and/or soil-applied to the soil around a planting site as the mixture as it is or after being diluted with water; applied by mixing it with the soil in a planting pit during transplanting or planting of a crop; applied to a butt of a crop; applied to the soil where a crop grows; or applied by treating seeds by immersion or dressing. Any application procedure may be employed to significantly inhibit the chemical substance form leaching in the soil without affecting the original effects of the chemical substance.

### Examples

This invention will be more specifically described with reference to, but not limited to, the examples described below.

### Example 1

In a 50 mL beaker are placed dinotefuran (4 mg, 1.97 × 10⁻⁶ mol; hereinafter, referred to as "Compound A"), water (10 g) and tannic acid (Junsei Kagaku Co. Ltd., 60 mg, 1.97 × 10⁻⁵ mol; hereinafter, referred to as "Compound P"), and the mixture was stirred for dissolving these materials. After completion of dissolving, the solution was analyzed for Compound A. In a separate vessel, lead acetate (60 mg, 1.97 × 10 ⁻⁵ mol; hereinafter, referred to as "Compound a") was dissolved in water (10 mL), and the entire solution was added to the above aqueous solution containing dinotefuran and tannic acid. After stirring for a while, a coprecipitate was formed. The supernatant was analyzed for Compound A to determine a proportion of Compound A taken into the coprecipitate.

In a similar manner, for the following combinations of a chemical substance and a metal salt, a proportion of the chemical substance taken into a coprecipitate was determined.

Chemical substance: (B) acephate, (C) acetamiprid, (D) urea;
Chelating agent: (Q) sodium ethylenediamine tetraacetate, (R) aminotrimethylenephosphonic acid;
Metal salt: (b) potassium acetate, (c) manganese acetate, (d) aluminum acetate, (e) nickel acetate, (f) cobalt acetate, (g) calcium acetate, (h) magnesium acetate, (i) magnesium chloride and (j) sodium acetate.

The results are shown in Table 1, where (A) to (D), (P) to (R) and (a) to (j) represent the above compounds, respectively.

**Table 1**

| Results for various combinations of a chemical substance, tannic acid and a metal salt | | | |
|---|---|---|---|
| No. | Compd. × Compd. × Metal salt (molar ratio) | Presence of a coprecipitate | Percentage of the chemical substance in a coprecipitate (%) |
| 1 | (A) (P) (a) (1:10:10) | Yes | 48 |
| 2 | (B) (P) (a) (1:10:10) | Yes | 53 |
| 4 | (C) (P) (a) (1:10:10) | Yes | 52 |
| 5 | (D) (P) (a) (1:10:10) | Yes | 46 |
| 6 | (A) (P) (b) (1:10:10) | Yes | 51 |
| 7 | (A) (P) (c) (1:10:10) | Yes | 50 |
| 8 | (A) (P) (d) (1:10:10) | Yes | 47 |
| 9 | (A) (P) (e) (1:10:10) | Yes | 47 |
| 10 | (A) (P) (f) (1:10:10) | Yes | 50 |
| 11 | (A) (P) (g) (1:10:10) | Yes | 51 |
| 12 | (A) (P) (h) (1:10:10) | Yes | 52 |
| 13 | (A) (P) (i) (1:10:10) | Yes | 51 |
| 14 | (A) (P) (i) (1:10:10) | No | - |
| 15 | (A) (P) (h) (1:2:2) | Yes | 47 |
| 16 | (A) (P) (h) (1:50:50) | Yes | 52 |
| 17 | (A) (P) (h) (1:0.7:0.7) | Yes | 32 |
| 18 | (A) (P) (h) (1:2:10) | Yes | 50 |
| 19 | (A) (Q) (a) (1:10:10) | Yes | 4 |
| 20 | (A) (R) (a) (1:10:10) | Yes | 3 |

These results indicate that a chemical substance was taken into a coprecipitate by means of coprecipitation of the chemical substance, tannic acid and a metal salt other than sodium.

### Example 2

In a 50 mL beaker were placed dinotefuran (4 mg, 1.97 × 10⁻⁶ mol), water (10 g) and (+)-catechin (Tokyo Kasei Industries Co. Ltd., 60 mg), and the mixture was stirred for dissolving these materials. After completion of dissolving, the solution was analyzed for dinotefuran. In a separate vessel, lead acetate (60 mg, 1.97 × 10⁻⁵ mol) was dissolved in water (10 mL), and the entire solution was added to the above aqueous solution containing dinotefuran and (+)-catechin. After stirring for a while, a coprecipitate was formed. The supernatant was analyzed for dinotefuran A to determine a proportion of dinotefuran taken into the coprecipitate. The results show that 41 % of dinotefuran was taken.

### Example 3: Preparation of formulations

### Formulation Example 1: granule

In a vessel were well mixed 5.1 parts of dinotefuran, 0.2 parts of Airrole CT-1 (Toho Chemical Co. Ltd.; sodium dioctylsulfosuccinate), 3 parts of Newcalgen RX-C (Takemoto Yushi Co. Ltd.; sodium lignin sulfonate), 2 parts of PVA-217 (Kureha Chemical Industry Co., Ltd.; polyvinyl alcohol), 5 parts of tannic acid (Junsei Kagaku Co. Ltd.), 59.3 parts of clay and 25.4 parts of talc. The mixture was kneaded after adding water, and then granulated by an extrusion granulator with a screen size of 0.8 mm. The granule thus prepared was dried in a fluidized bed oven and graded to provide a granule preparation with 10 to 32 mesh as Formulation-1.

### Formulation Example 2; granule

In a vessel were well mixed 5.1 parts of dinotefuran, 0.2 parts of Airrole CT-1 (Toho Chemical Co. Ltd.; sodium dioctylsulfosuccinate), 3 parts of Newcalgen RX-C (Takemoto Yushi Co. Ltd.; sodium lignin sulfonate), 2 parts of PVA-217 (Kureha Chemical Industry Co., Ltd.; polyvinyl alcohol), 5 parts of tannic acid (Junsei Kagaku Co. Ltd.), 5 parts of magnesium chloride, 55.8 parts of clay and 23.9 parts of talc. The mixture was kneaded after adding water, and then granulated by an extrusion granulator with a screen size of 0.8 mm. The granule thus prepared was dried in a fluidized bed oven and graded to provide a granule preparation with 10 to 32 mesh as Formulation-2.

### Formulation Example 3: wettable powder

In a vessel were mixed 10.5 parts of dinotefuran, 74.5 parts of clay for wettable powder, 2 parts of Newcalgen NX-170 (Takemoto Yushi Co. Ltd.; sodium POE alkylphenyl ether sulfonate), 3 parts of Newcalgen PS-P (Takemoto Yushi Co. Ltd.; Na alkylnaphthalene sulfonate condensation product) and 10 parts of tannic acid (Junsei Kagaku Co. Ltd.), and the mixture was ground with a pulverizer to provide a wettable powder as Formulation-3.

### Formulation Example 4: granule

A granule preparation, as Formulation-4, was prepared as described in Formulation Example 2 substituting acetamiprid for dinotefuran.

### Formulation Example 5: granule

A granule preparation, as Formulation-5, was prepared as described in Formulation Example 2 substituting acephate for dinotefuran.

### Formulation Example 6: granule

A granule, preparation, as Formulation-6, was prepared as described in Formulation Example 2 substituting urea for dinotefuran.

### Formulation Example 7

The coprecipitate precipitated in combination 13 in Table 1 was collected by filtration and washed with a small amount of water to provide Formulation-7.

### Comparative Example 1: granule

In a vessel were well mixed 5.1 parts of dinotefuran, 0.2 parts of Airrole CT-1 (Toho Chemical Co. Ltd.; sodium dioctylsulfosuccinate), 3 parts of Newcalgen RX-C (Takemoto Yushi Co. Ltd.; sodium lignin sulfonate), 2 parts of PVA-217 (Kureha Chemical Industry Co., Ltd.; polyvinyl alcohol), 59.3 parts of clay and 26.9 parts of talc. The mixture was kneaded after adding water, and then granulated by an extrusion granulator with a screen size of 0.8 mm. The granule thus prepared was dried in a fluidized bed oven and graded to provide a granule preparation with 10 to 32 mesh as Comparative Formulation-1.

### Comparative Example 2: granule

A granule preparation as Comparative Formulation-2 was prepared as described in Comparative Example 1 substituting acetamiprid for dinotefuran.

### Comparative Example 3: granule

A granule preparation as Comparative Formulation-3 was prepared as described in Comparative Example 1 substituting acephate for dinotefuran.

### Comparative Example 4: granule

A granule preparation as Comparative Formulation-4 was prepared as described in Comparative Example 1 substituting urea for dinotefuran.

### Example 4: Soil leaching test

Twelve acrylic cylinders with a diameter of 85 mm and a height of 10 mm were piled. The bottom was covered with a metal net for avoiding falling of a soil. The vessel was evenly filled with the soil in Mobara-City, Japan. The formulation prepared in Example 2 was applied to the soil at 20 mm from the top surface. Then, a predetermined amount of rain was fallen using an artificial rain machine. Three days after rainfall, the soil was cut into 10 mm zones downward from the zone to which the formulation was applied. These cut soils were determined for the compound to calculate its distribution. The results are shown in Table 2.

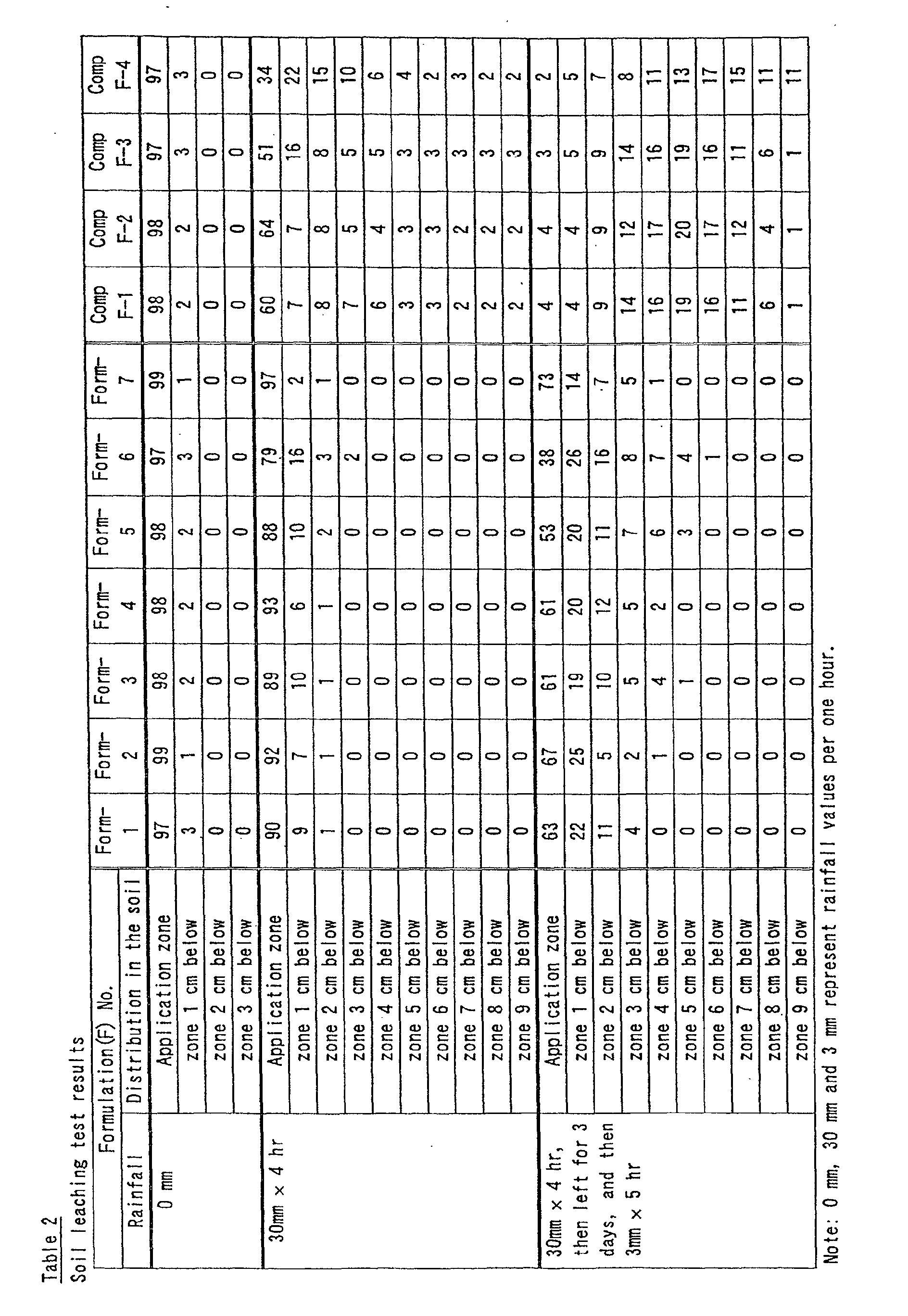

The results indicate that leaching of chemical substance in the soil was inhibited by the mixture containing a chemical substance and tannic acid, and also indicate that without adding a metal salt, the mixture had an equivalent effect of inhibiting leaching in the soil.

### Example 5: Results of an efficacy test for a chemical substance

An eggplant which had grown in a pot and had been parasitized by aphids was transplanted to a container in a greenhouse. Then, the formulation described in Example 2 was applied to the stump of the eggplant at a rate of 10 mg as an active ingredient (50 mg for Formulation-5 and Comparative Example-3). Seven days after application, the number of living aphids on the eggplant was determined. The results are shown in Table 3 as a control rate.

**Table 3**

| Results of an pesticidal effect test for a chemical compound | |
|---|---|
| Formulation | Control rate (%) |
| Form-1 | 100 |
| Form-2 | 100 |
| Form-3 | 100 |
| Form-4 | 100 |
| Form-5 | 100 |
| Form-7 | 100 |
| Comp. Form-1 | 100 |
| Comp. Form-2 | 100 |
| Comp. Form-3 | 100 |
| Untreated zone | 0 |

The results indicate that a formulation contributing the process of this invention retained the original effects of the chemical substance.

### Example 4: Results of an efficacy test and a soil-leaching test for a chemical substance

When transplanting an eggplant grown in a pot to a field near Mobara City in Japan, the formulation prepared in Example 2 was applied to its stump at a rate of 10 mg as an active ingredient. Fifty days after application, an efficacy to aphids was evaluated. On the other hand, the soil was collected using a cylindrical soil sampler for analyzing dinotefuran in the soil. The results are summarized in Table 4.

**Table 4**

| Control rates (%) against aphids | | | | |
|---|---|---|---|---|
| Formulation | Form-1 | Form-2 | Comp. Form-1 | Non-treated zone |
| aphids | 100 | 98 | 76 | 0 |

In the zones where Formulations-1 and -2 were applied, dinotefuran was not detected in the soil samples 30 cm below the application layer.

The results indicate that the mixture of this invention whereby leaching of the chemical substance was inhibited in the soil can retain its efficacy for a long period.

As described above, a process according to this invention allows an active ingredient to be effective for a longer time without adversely affecting the original effects of the chemical substance, and can prevent the chemical substance from leaching in the soil. As a result, the chemical substance can be used while being prevented from infiltrating into the underground to cause ground water pollution. Thus, this invention is industrially quite useful.

## Claims

1. An agricultural composition comprising an agriculturally active ingredient with a water solubility of from 600 ppm to 85 % and/or with a soil-adsorption equilibrium constant (Koc) of from 5 to 200, and a tannin.

2. An agricultural composition as claimed in Claim 1 wherein the agriculturally active ingredient is an organo-phosphoric insecticidal agent or an insecticidal agent having a nitromethylene, nitroimino or cyanoimino group.

3. An agricultural composition as claimed in Claim 2 wherein the agriculturally active ingredient is at least one selected from the group consisting of nitenpyram, acetamiprid and 3-(2-chlorothiazol-5-ylmethyl)-5-methyl-1,3,5-oxadiazinan-4-ylidene-N-(nitro)amine (common name: thiamethoxam).

4. An agricultural composition as claimed in Claim 2 wherein the agriculturally active ingredient is (RS)-1-methyl-2-nitro-3-[(3-tetrahydrofuryl) methyl]guanidine (common name: dinotefuran).

5. An agricultural composition as claimed in any of Claims 1 to 4 comprising one part by weight of the agriculturally active ingredient and from 0.5 to 90 parts by weight of the tannin.

6. An agricultural composition as claimed in any of Claims 1 to 5 wherein the tannin is tannic acid.

7. A method of preventing leaching of an agriculturally active ingredient in the soil wherein a mixture prepared by blending an agriculturally active ingredient with a water solubility of from 600 ppm to 85 % and/or with a soil-adsorption equilibrium constant (Koc) of from 5 to 200 with a tannin is applied, which allows the tannin in the mixture and metal ions in the soil to prevent the agriculturally active ingredient in the mixture from leaching in the soil.

8. A method of preventing leaching of an agriculturally active ingredient in the soil as claimed in Claim 7 wherein the agriculturally active ingredient is an organo-phosphoric insecticidal agent or an insecticidal agent having a nitromethylene, nitroimino or cyanoimino group.

9. A method of preventing leaching of an agriculturally active ingredient in the soil as claimed in Claim 7 or 8 wherein the agriculturally active ingredient is at least one selected from the group consisting of nitenpyram, acetamiprid and 3-(2-chlorothiazol-5-ylmethyl)-5-methyl-1,3,5-oxadiazinan-4-ylidene-N-(nitro)amine (common name: thiamethoxam).

10. A method of preventing leaching of an agriculturally active ingredient in the soil as claimed in Claim 7 or 8 wherein the agriculturally active ingredient is (RS)-1-methyl-2-nitro-3-[(3-tetrahydrofuryl)methyl]guanidine (common name: dinotefuran).

11. A method for preventing leaching of an agriculturally active ingredient in the soil as claimed in any of Claims 7 to 10 comprising from 0.5 to 90 parts by weight of the tannin to one part by weight of the agriculturally active ingredient.

12. A method of preventing leaching of an agriculturally active ingredient in the soil as claimed in any of Claims 7 to 11 wherein the tannin is tannic acid.

13. A method of controlling a pest comprising the step of applying a pesticidal composition comprising an pesticdal ingredient with a water solubility of from 600 ppm to 85 % and/or with a soil-adsorption equilibrium constant (Koc) of from 5 to 200 and having a nitromethylene, nitroimino or cyanoimino group, and a tannin, to stems and leaves of a plant or to the soil around a planting site of a plant.
